# EUROPEAN PATENT APPLICATION

(11) **EP 4 827 077 A1**
(43) Date of publication of application: **21.10.2026**
(21) Application number: 26171856.3
(22) Date of filing: 13.04.2026
(51) Int. Cl.: H04N 1/00, H04N 1/32

(54) **INFORMATION PROCESSING APPARATUS AND DATA TRANSMISSION SYSTEM**

(30) Priority: 18.04.2025 JP 2025069145
(71) Applicant: KYOCERA Document Solutions Inc., Osaka-shi, Osaka 540-8585 (JP)
(72) Inventor: SARTE, Clay Mark, Osaka-shi, Osaka, 540-8585 (JP); DY, Neil, Osaka-shi, Osaka, 540-8585 (JP); FAUSTINORIO, Christian, Osaka-shi, Osaka, 540-8585 (JP)
(74) Representative: Herrero & Asociados, S.L.

(57) **Abstract**

An information processing apparatus (2) includes a communication device (24) performing communication with the outside over a network, and a controller (210) managing one or more terminal apparatuses (3) and communicating with the terminal apparatuses (3) via the communication device (24) over a network based on a request from a document reading apparatus (1) having a scanning function of reading a document image and generating scan data. The controller (210), via the communication device (24), transmits list information of the terminal apparatuses (3) to the document reading apparatus (1), receives selection information from among the terminal apparatuses (3) indicated by the list information from the document reading apparatus (1), sets the terminal apparatus (3) indicated by the received selection information as a transmission destination of the scan data, acquires the scan data generated by the document reading apparatus (1), and transmits the acquired scan data to the terminal apparatus (3).

## Description

### BACKGROUND

The present invention relates to an information processing apparatus and a data transmission system.

A document reading apparatus (such as a multifunction peripheral) having a scanning function of reading a document image and generating scan data is capable of transmitting the scan data to an arbitrary terminal apparatus (such as a personal computer).

### SUMMARY

According to an aspect of the present invention, a technology further improving the foregoing technology is proposed.

An information processing apparatus according to an aspect of the present invention includes a communication device and a controller. The communication device performs communication with the outside over a network. The controller manages one or more terminal apparatuses and communicates with the terminal apparatuses via the communication device over a network based on a request from a document reading apparatus having a scanning function of reading a document image and generating scan data. The controller, via the communication device, transmits list information of the terminal apparatuses to the document reading apparatus, receives selection information from among the terminal apparatuses indicated by the list information from the document reading apparatus, and sets the terminal apparatus indicated by the received selection information as a transmission destination of the scan data. The controller, via the communication device, acquires the scan data generated by the document reading apparatus, and transmits the acquired scan data to the terminal apparatus set as the transmission destination.

A data transmission system according to another aspect of the present invention includes one or more terminal apparatuses, a document reading apparatus, and an information processing apparatus. The document reading apparatus has a scanning function of reading a document image and generating scan data. The information processing apparatus communicates with the terminal apparatuses and the document reading apparatus over a network. The information processing apparatus includes a communication device and a controller. The communication device performs communication with the outside over a network. The controller manages one or more terminal apparatuses and communicates with the terminal apparatuses via the communication device over a network based on a request from the document reading apparatus having a scanning function of reading a document image and generating scan data. The controller, via the communication device, transmits list information of the terminal apparatuses to the document reading apparatus, receives selection information from among the terminal apparatuses indicated by the list information from the document reading apparatus, and sets the terminal apparatus indicated by the received selection information as a transmission destination of the scan data. The controller, via the communication device, acquires the scan data generated by the document reading apparatus, and transmits the acquired scan data to the terminal apparatus set as the transmission destination. The terminal apparatus saves the scan data transmitted from the information processing apparatus in a directory.

### BRIEF DESCRIPTION OF THE DRAWINGS

FIG. 1 is a diagram showing an overall configuration of a data transmission system including an information processing apparatus according to an embodiment of the present invention.
FIG. 2 is a functional block diagram schematically showing a main internal configuration of an image forming apparatus.
FIG. 3 is a functional block diagram schematically showing a main internal configuration of the information processing apparatus according to the embodiment of the present invention.
FIG. 4 is a flowchart showing an example of a flow when scan data generated by the image forming apparatus is transmitted to a terminal apparatus.
FIG. 5 is a diagram showing an example of an operation screen displayed on a display device of the image forming apparatus.

### DETAILED DESCRIPTION

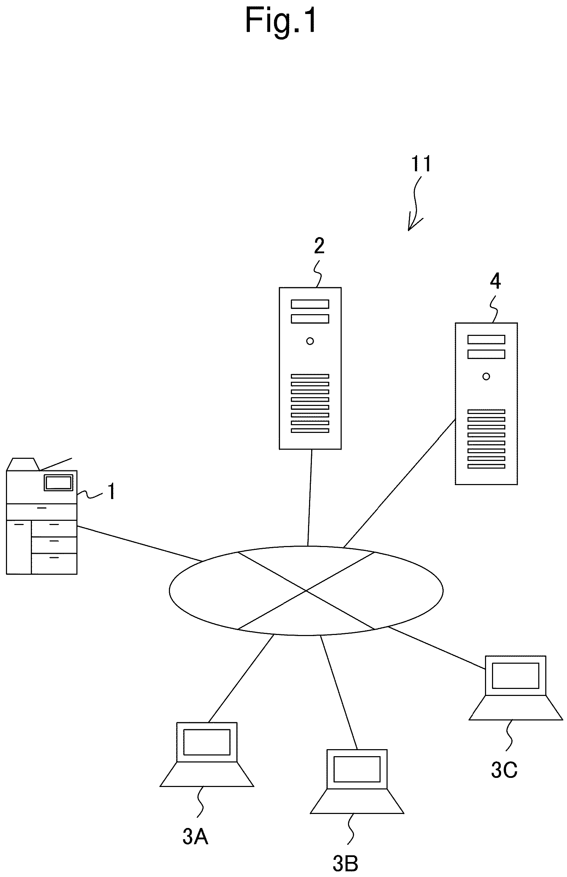

Hereinafter, an information processing apparatus and a data transmission system according to an embodiment of the present invention will be described with reference to the drawings. FIG. 1 is a diagram showing an overall configuration of a data transmission system including an information processing apparatus according to the embodiment of the present invention.

A data transmission system 11 according to the embodiment is configured to include an image forming apparatus 1, an information processing apparatus 2, a plurality of terminal apparatuses 3A to 3C (which will hereinafter be collectively referred to as "terminal apparatuses 3"), and an external storage 4, which are present on a network such as the Internet. For example, the image forming apparatus 1 is a multifunction peripheral having multiple functions such as a copying function, a printing function, a scanning function of reading a document image and generating scan data, and a faxing function. The image forming apparatus 1 is an example of a document reading apparatus in the claims.

The information processing apparatus 2 manages the terminal apparatuses 3 over the network. The information processing apparatus 2 functions as a manager apparatus managing one or more terminal apparatuses 3 and also functions as an agent apparatus of the image forming apparatus 1 performing communication with the terminal apparatuses 3 over the network based on a request from the image forming apparatus 1. For example, the information processing apparatus 2 is a management server.

For example, each terminal apparatus 3 is a personal computer, which includes a storage apparatus such as a hard disk drive (HDD) or a solid state drive (SSD), and saves various files in directories of the storage apparatus. For example, the external storage 4 is a storage server.

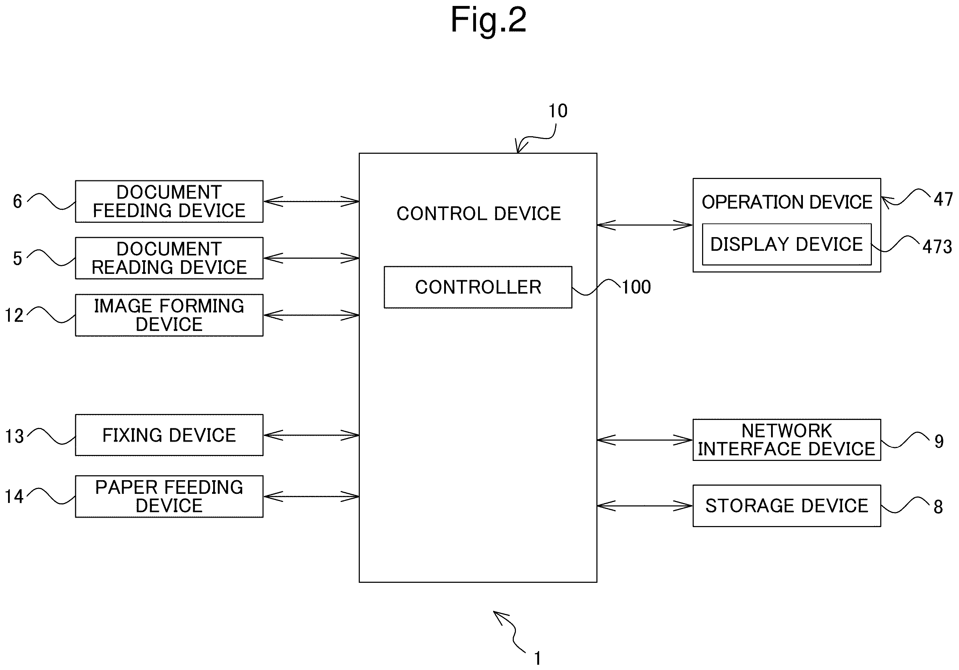

FIG. 2 is a functional block diagram schematically showing a main internal configuration of the image forming apparatus 1. The image forming apparatus 1 is configured to include a control device 10, a document feeding device 6, a document reading device 5, an image forming device 12, a fixing device 13, a paper feeding device 14, an operation device 47, a network interface device 9, and a storage device 8.

The document feeding device 6 is configured to be openable and closable on an upper surface of the document reading device 5 by a hinge or the like (not shown), and the document feeding device 6 functions as a document pressing cover when reading a document placed on a platen glass (not shown). In addition, the document feeding device 6 is referred to as an auto document feeder (ADF), which includes a document placement tray (not shown) and supplies documents placed on the document placement tray to the document reading device 5 one by one.

The document reading device 5 reads a document image and generates scan data. The document reading device 5 includes a scanner or the like and reads a document fed from the document feeding device 6 or reads a document placed on the platen glass. In addition, the document reading device 5 is capable of sequentially reading a plurality of document images sent from the document feeding device 6.

A case in which a document reading operation is performed by the image forming apparatus 1 will be described. The document reading device 5 optically reads an image of a document supplied to the document reading device 5 from the document feeding device 6 or a document placed on the foregoing platen glass and generates image data. The image data generated by the document reading device 5 is saved in an image memory (not shown) or the like.

A case in which an image forming operation is performed by the image forming apparatus 1 will be described. The image forming device 12 includes, for each color, a photosensitive drum, a charging apparatus, an exposure apparatus, a developing apparatus, and a primary transfer apparatus, and has a mechanism for forming an image on recording paper serving as a recording medium through secondary transfer via an intermediate transfer belt. The image forming device 12 forms an image on recording paper fed from the paper feeding device 14 to produce a printed material based on image data generated through a document reading operation, image data stored in the image memory or the like, image data received from a network-connected computer, or the like.

The fixing device 13 is a fixing apparatus including a heat roller, a pressure roller, and a drive mechanism for rotationally driving these rollers. The fixing device 13 heats and presses recording paper on which an image is formed by the image forming device 12 at a nip between both the foregoing rollers to fix the image onto the recording paper, and the recording paper subjected to fixing processing is discharged to a discharge tray (not shown).

The paper feeding device 14 includes a paper cassette and further includes a pickup roller, transport rollers, a transport path, and rotational drive mechanisms for respective rollers for picking up recording paper from the paper cassette and feeding it to the image forming device 12.

The operation device 47 includes various hardware keys operated by a user, and receives an instruction such as an instruction to execute an image forming operation from a user regarding various operations and processing which can be executed by the image forming apparatus 1 in response to an operation of the hardware keys.

The operation device 47 includes a display device 473 for displaying operation guidance and the like to an operator. In addition, the operation device 47 receives an input of an instruction from a user based on a user operation (touch operation) on a screen displayed on the display device 473 via a touch panel provided in the display device 473.

The display device 473 is constituted of a liquid crystal display (LCD) or the like. When an operator performs an operation of touching a button or a key displayed on the screen, the touch panel receives an instruction associated with the position of the touch operation. In this case, the touch panel functions as an operation device.

The network interface device 9 is a communication interface for performing transmission and reception of various kinds of data with respect to an external apparatus (for example, a personal computer) within a local area or over the Internet.

The storage device 8 is a large-capacity storage apparatus such as an HDD or an SSD, and stores various control programs and the like.

The control device 10 is configured to include a processor, a random access memory (RAM), a read only memory (ROM), and a dedicated hardware circuit. For example, the processor is a central processing unit (CPU), an application specific integrated circuit (ASIC), a micro processing unit (MPU), or the like. The control device 10 includes a controller 100.

The control device 10 functions as the controller 100 through operation of the foregoing processor according to the control programs and the like stored in the storage device 8. However, the controller 100 can also be constituted by each of hardware circuits instead of operation according to the control programs by the control device 10. Hereinafter, unless otherwise specified, the same applies to each embodiment.

The controller 100 governs overall operational control of the image forming apparatus 1. The controller 100 is connected to the document feeding device 6, the document reading device 5, the image forming device 12, the fixing device 13, the paper feeding device 14, the operation device 47, the network interface device 9, and the storage device 8, performs drive control or the like of these devices, and executes various processing and the like required for image formation by the image forming apparatus 1.

For example, upon instruction of execution of scanning by a user and reception of the instruction by the operation device 47, the controller 100 controls driving of the document reading device 5 and the like to read a document image and generate scan data, and also produces a file name thereof.

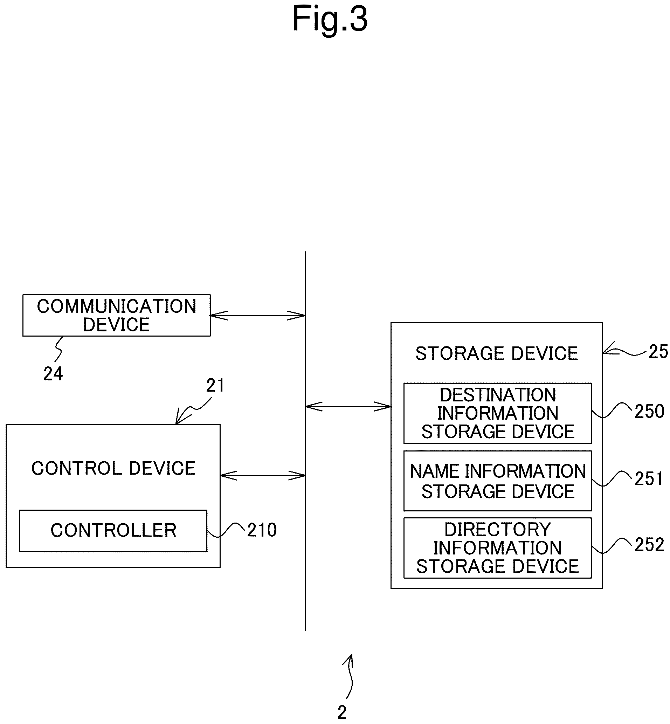

FIG. 3 is a functional block diagram schematically showing a main internal configuration of the information processing apparatus 2. The information processing apparatus 2 includes a control device 21, a communication device 24, and a storage device 25. These constituents are capable of transmitting and receiving data or signals with each other through a communication bus.

The communication device 24 performs communication with the outside over a network. For example, the communication device 24 is a communication interface for performing transmission and reception of various kinds of data with respect to the image forming apparatus 1, the terminal apparatuses 3, and the external storage 4 within a local area or over the Internet.

The storage device 25 is a large-capacity storage apparatus such as an HDD or an SSD, and stores various control programs and the like. In addition, the storage device 25 has a destination information storage device 250, a name information storage device 251, and a directory information storage device 252.

Each of the destination information storage device 250, the name information storage device 251, and the directory information storage device 252 stores various kinds of information of the terminal apparatuses 3 which are management targets of the information processing apparatus 2 in association with identification information of the respective terminal apparatuses 3. The destination information storage device 250 stores IP addresses of the respective terminal apparatuses 3. The name information storage device 251 stores each of the device names enabling identification of the respective terminal apparatuses 3. The directory information storage device 252 stores directory information related to the directories inside the terminal apparatuses 3 for each terminal apparatus 3, and stores names of files saved inside the respective terminal apparatuses 3 and names of directories storing the files for each terminal apparatus 3.

The control device 21 is configured to include a processor, a RAM, a ROM, and a dedicated hardware circuit. For example, the processor is a CPU, an ASIC, an MPU, or the like. The control device 21 includes a controller 210.

The control device 21 functions as the controller 210 through operation of the foregoing processor according to the control programs stored in the storage device 25. However, the controller 210 can also be constituted by each hardware circuit instead of operation according to the control programs and the like by the control device 21. Hereinafter, unless otherwise specified, the same applies to each embodiment.

The controller 210 governs overall operational control of the information processing apparatus 2. The controller 210 is connected to the communication device 24 and the storage device 25 and performs drive control or the like of these devices.

The controller 210, via the communication device 24, transmits list information of the terminal apparatuses 3 to the image forming apparatus 1, receives selection information from among the terminal apparatuses 3 indicated by the list information from the image forming apparatus 1, and sets the terminal apparatus 3 indicated by the received selection information as a transmission destination of the scan data.

Moreover, the controller 210, via the communication device 24, acquires the scan data generated by the image forming apparatus 1, and transmits the acquired scan data to the terminal apparatus 3 set as the transmission destination.

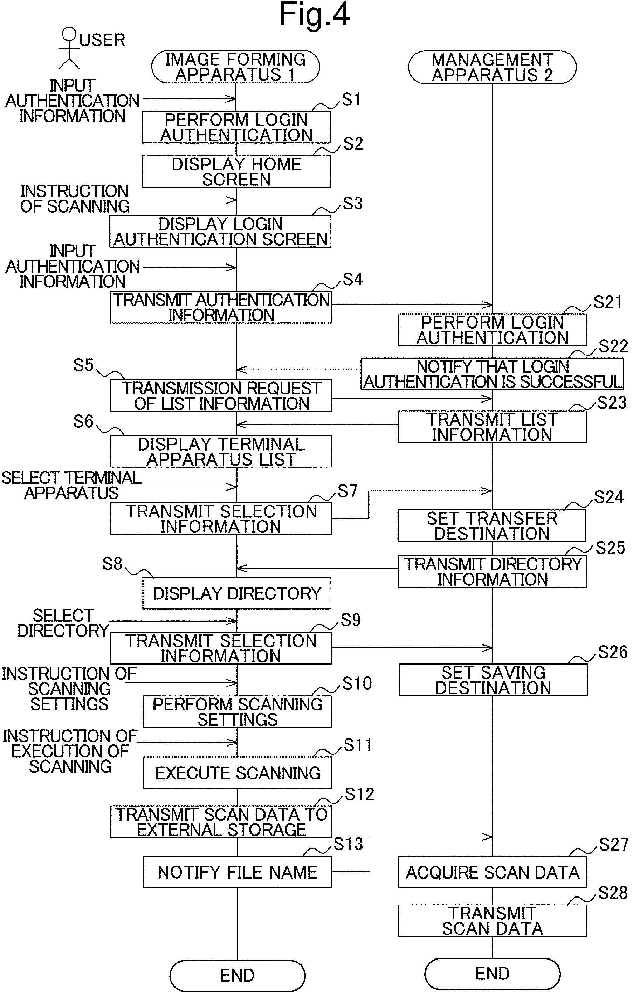

Next, a flow in a case in which scan data generated by the image forming apparatus 1 is transmitted to the terminal apparatus 3 will be described using the flowchart shown in FIG. 4.

When the operation device 47 receives an instruction to activate the apparatus based on a user operation, the controller 100 of the image forming apparatus 1 causes the display device 473 to display a login authentication operation screen. When the operation device 47 receives an input of authentication information required for login to the image forming apparatus 1, the controller 100 performs login authentication (S1).

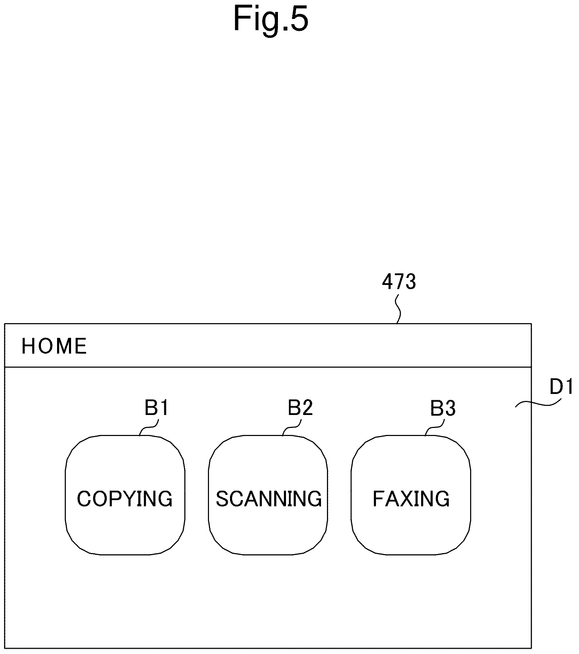

When it is determined that login authentication is successful, the controller 100 controls display of the display device 473 to cause the display device 473 to display a home screen D1 as shown in the example of FIG. 5 (S2). When a user wishes to perform copying, an operation button B1 is operated. When a user wishes to perform scanning (transmission of scan data to the terminal apparatus 3), an operation button B2 is operated. When a user wishes to perform faxing, an operation button B3 is operated.

When the operation button B2 is operated by a user and the operation device 47 receives an instruction of scanning associated with the operation button B2 from the user, the controller 100 causes the display device 473 to display the login authentication operation screen for the information processing apparatus 2 (S3).

When the operation device 47 receives an input of authentication information required for login to the information processing apparatus 2, the controller 100 transmits authentication information to the information processing apparatus 2 via the network interface device 9 (S4).

Upon reception of the authentication information transmitted from the image forming apparatus 1, the controller 210 of the information processing apparatus 2 performs login authentication based on the received authentication information (S21). When it is determined that authentication is successful, information indicating that authentication is successful (notification of successful authentication) is transmitted to the image forming apparatus 1 via the communication device 24 (S22).

Upon reception of the notification of successful authentication, the controller 100 of the image forming apparatus 1 transmits a transmission request of list information of the terminal apparatuses 3 to the information processing apparatus 2 via the network interface device 9 (S5).

Upon reception of the foregoing transmission request transmitted from the image forming apparatus 1, the controller 210 of the information processing apparatus 2 produces list information of the terminal apparatuses 3 based on the device names stored in the name information storage device 251, and transmits the produced list information to the image forming apparatus 1 via the communication device 24 (S23).

Upon reception of the list information, the controller 100 of the image forming apparatus 1 controls display of the display device 473 to cause the display device 473 to display a terminal apparatus list indicated by the received list information (S6). Upon selection of the terminal apparatus 3 by a user from the terminal apparatus list and reception of an operation of the selection by the operation device 47, the controller 100 transmits the selection information indicating the terminal apparatus 3 selected by the user to the information processing apparatus 2 via the network interface device 9 (S7).

Upon reception of the foregoing selection information transmitted from the image forming apparatus 1, the controller 210 of the information processing apparatus 2 sets the terminal apparatus 3 indicated by the received selection information as a transmission destination of scan data (S24). The controller 210 reads the directory information of the terminal apparatus 3 set as the transmission destination of the scan data from the directory information storage device 252, and transmits the read directory information to the image forming apparatus 1 via the communication device 24 (S25). The controller 210 successively acquires the directory information of each terminal apparatus 3 through communication between the information processing apparatus 2 and the terminal apparatus 3 from each terminal apparatus 3, and updates the directory information of each terminal apparatus 3 stored in the directory information storage device 252.

Upon reception of the directory information, the controller 100 of the image forming apparatus 1 causes the display device 473 to display the directory indicated by the received directory information (S8). Accordingly, a user can refer to the directory inside the terminal apparatus 3, and can select a directory.

Upon selection of the directory inside the terminal apparatus 3 by a user and reception of an operation of the selection by the operation device 47, the controller 100 transmits the selection information indicating the directory selected by the user to the information processing apparatus 2 via the network interface device 9 (S9).

Upon reception of the foregoing selection information transmitted from the image forming apparatus 1, the controller 210 of the information processing apparatus 2 sets and stores the directory indicated by the received selection information as a saving destination of scan data (S26).

Upon instruction of scanning settings (for example, settings such as color scanning or monochrome scanning) by a user and reception of the instruction by the operation device 47, the controller 100 of the image forming apparatus 1 performs scanning settings in response to the instruction (S10). Upon instruction of execution of scanning by a user and reception of the instruction by the operation device 47, the controller 100 controls driving of the document reading device 5 and the like to execute scanning in accordance with the scanning settings (S11). Further, the controller 100 generates scan data of a document image, produces a file name thereof, and transmits the generated scan data to the external storage 4 via the network interface device 9 (S12). Thereafter, the controller 100 transmits the file name of the scan data, which has been transmitted to the external storage 4, to the information processing apparatus 2 via the network interface device 9 (S13). This transmission notifies the information processing apparatus 2 that the scan data has been transmitted to the external storage 4.

Upon reception of the foregoing file name transmitted from the image forming apparatus 1, the controller 210 of the information processing apparatus 2 accesses the external storage 4 via the communication device 24, and acquires the scan data indicated by the received file name from the external storage 4 (S27). The controller 210 transmits the acquired scan data together with the directory information indicating a directory for saving to the terminal apparatus 3 set as the transmission destination via the communication device 24 (S28). The terminal apparatus 3 saves the received scan data in the directory indicated by the directory information.

According to the foregoing embodiment, scan data can be transmitted to the terminal apparatus 3 from the image forming apparatus 1 via the information processing apparatus 2 simply by operating the operation device 47 of the image forming apparatus 1. Since the operation involves relatively simple operations of selecting the terminal apparatus 3 from the terminal apparatus list and selecting a directory, it is easy to perform the operation even for a user unfamiliar with network technologies. Therefore, with simple operations and setting work, it is possible to employ a configuration in which scan data is transmitted to the terminal apparatus 3 from the image forming apparatus 1. In addition, complicated setting work required when setting a terminal apparatus as a transmission destination of data from the image forming apparatus 1 by connecting the image forming apparatus 1 and the terminal apparatus 3 through a USB cable or a LAN is unnecessary.

In the foregoing embodiment, a case has been described in which a user selects not only the terminal apparatus 3 which is the transmission destination of scan data but also a directory which will become the saving destination. However, as another embodiment, no directory may be selected by a user, and the controller 210 may save scan data in a directory set in advance (for example, a shared directory).

In addition, in the foregoing embodiment, a case has been described in which the controller 210 of the information processing apparatus 2 acquires scan data from the external storage 4. However, as another embodiment, the controller 210 may directly acquire scan data from the image forming apparatus 1. In this case, when scan data is generated through document reading by the document reading device 5, the controller 100 of the image forming apparatus 1 produces a file name thereof, and transmits the generated scan data to the information processing apparatus 2 via the network interface device 9. The controller 210 of the information processing apparatus 2 stores the scan data in the storage device 25, and transmits the acquired scan data together with the directory information indicating a directory for saving to the terminal apparatus 3 set as the transmission destination.

Generally, data communication between a document reading apparatus such as a multifunction peripheral and a terminal apparatus such as a personal computer often uses connection through a universal serial bus (USB) cable or a LAN. However, complicated setting work is often required to set a terminal apparatus as a transmission destination of data from the document reading apparatus.

In addition, as communication over networks such as Wi-Fi (registered trademark) connection has become common, a document reading apparatus can be disposed at a relatively flexible location. Therefore, the document reading apparatus may be disposed at a location distant from a terminal apparatus. In this case, in order to transmit scan data to a terminal apparatus, for example, it is necessary to transmit and save the scan data in an external storage on a network and for the terminal apparatus to acquire the scan data from the external storage. However, in this case as well, operations and settings for executing this are also very complicated and are difficult for a user unfamiliar with network technologies.

In contrast, according to the foregoing embodiment, with simple operations and setting work, it is possible to employ a configuration in which scan data is transmitted to a terminal apparatus from the document reading apparatus.

The present invention is not limited to the configurations of the foregoing embodiment, and various modifications are possible. In addition, in the foregoing embodiment, the configurations and processing described in the foregoing embodiment using FIGS. 1 to 5 are merely an embodiment of the present invention, and the present invention is not intended to be limited to the configurations and processing.

## Claims

1. An information processing apparatus (2) comprising:
a communication device (24) performing communication with the outside over a network; and
a controller (210) managing one or more terminal apparatuses (3) and communicating with the terminal apparatuses (3) via the communication device (24) over a network based on a request from a document reading apparatus (1) having a scanning function of reading a document image and generating scan data,
wherein the controller (210),
via the communication device (24), transmits list information of the terminal apparatuses (3) to the document reading apparatus (1), receives selection information from among the terminal apparatuses (3) indicated by the list information from the document reading apparatus (1), and sets the terminal apparatus (3) indicated by the received selection information as a transmission destination of the scan data, and
via the communication device (24), acquires the scan data generated by the document reading apparatus (1), and transmits the acquired scan data to the terminal apparatus (3) set as the transmission destination.

2. The information processing apparatus (2) according to claim 1, further comprising:
a directory information storage device (252) storing directory information related to directories in the terminal apparatuses (3),
wherein the controller (210)
reads the directory information of the terminal apparatus (3) set as the transmission destination of the scan data from the directory information storage device (252),
transmits the read directory information to the document reading apparatus (1) via the communication device (24),
receives, from the document reading apparatus (1), selection information indicated by the directory information from among the directories,
sets the directory indicated by the received selection information as a saving destination of the scan data, and
transmits the scan data to the terminal apparatus (3) set as the transmission destination.

3. The information processing apparatus (2) according to claim 1 or 2,
wherein the controller (210) acquires, from an external storage (4) on the network, the scan data transmitted to the storage from the document reading apparatus (1).

4. The information processing apparatus (2) according to claim 1,
wherein the controller (210) has an authentication processing function of performing login authentication based on authentication information transmitted from the document reading apparatus (1), and transmitting list information of the terminal apparatuses only when authentication is successful.

5. A data transmission system comprising:
one or more terminal apparatuses (3);
a document reading apparatus (1) having a scanning function of reading a document image and generating scan data; and
an information processing apparatus (2) communicating with the terminal apparatuses (3) and the document reading apparatus (1) over a network,
wherein the information processing apparatus (2) includes
a communication device (24) performing communication with the outside over a network, and
a controller (210) managing one or more terminal apparatuses (3) and communicating with the terminal apparatuses (3) via the communication device (24) over a network based on a request from the document reading apparatus (1) having a scanning function of reading a document image and generating scan data,
the controller (210),
via the communication device (24), transmits list information of the terminal apparatuses (3) to the document reading apparatus (1), receives selection information from among the terminal apparatuses (3) indicated by the list information from the document reading apparatus (1), and sets the terminal apparatus (3) indicated by the received selection information as a transmission destination of the scan data, and
via the communication device (24), acquires the scan data generated by the document reading apparatus (1), and transmits the acquired scan data to the terminal apparatus (3) set as the transmission destination, and
the terminal apparatus (3) saves the scan data transmitted from the information processing apparatus (2) in a directory.
